# EUROPÄISCHE PATENTSCHRIFT

(11) **EP 4 148 453 B1**
(45) Veröffentlichungstag und Bekanntmachung des Hinweises auf die Patenterteilung: **05.11.2025**
(21) Anmeldenummer: 22192007.7
(22) Anmeldetag: 24.08.2022
(51) Int. Cl.: G01S 7/03, G01S 7/40, G01S 13/34

(54) **KALIBRIERUNG UND BETRIEB EINES CW-RADARSENSORS**
CALIBRATION AND OPERATION OF A CW RADAR SENSOR
ÉTALONNAGE ET FONCTIONNEMENT D'UN CAPTEUR RADAR CW

(30) Priorität: 09.09.2021 DE 102021004564
(43) Veröffentlichungstag der Anmeldung: 15.03.2023
(73) Patentinhaber: Diehl Defence GmbH & Co. KG, 88662 ÜBERLINGEN (DE)
(72) Erfinder: Subatzus, Manuel, 90763 Fürth (DE)
(74) Vertreter: Diehl Patentabteilung

(56) Entgegenhaltungen:
- EP-A1- 3 454 077
- US-A1- 2020 174 098

## Beschreibung

Die Erfindung betrifft ein Kalibrier- und ein Betriebsverfahren eines CW-Radarsensors und dabei dessen Eigenschaft, die Entfernung eines Objekts von einer Antennenebene des Radarsensors ermitteln zu können.

Aus der DE 10 2014 220 117 A1 sind Dauerstrichradare bekannt, auch Continuous Wave (CW) Radare genannt. Diese senden ein kontinuierliches Hochfrequenzsignal aus, um verschiedene physikalische Eigenschaften (wie z.B. Geschwindigkeit und Richtung) von einem oder mehreren Zielen / Objekten relativ zum Radargerät zu erfassen. Die ausgesendete Strahlung in Form einer elektromagnetischen Welle wird dabei zumindest teilweise von einem Objekt in Richtung des Radars zurück reflektiert und anschließend vom Radar als zeitverzögertes Echosignal empfangen, wobei auch die Echosignale kontinuierlich empfangen werden. Das gleichzeitige Senden und Empfangen stellt den wesentlichen Unterschied zu den Impuls-Radaren dar, die kurze, elektromagnetische Impulse aussenden und dann auf ein Echosignal warten. Aus der Laufzeit, die das Signal vom Aussenden bis zum Empfangen braucht, kann dann der Abstand bzw. die Entfernung des Objektes vom Radargerät errechnet werden.

Wird in einem Dauerstrichradargerät eine Frequenzmodulation verwendet, so spricht man von einem frequenzmodulierten Dauerstrichradar oder auch FMCW-Radar (frequency modulated continuous wave). Diese sogenannten FMCW Radare modulieren die Sendefrequenz mit der Zeit, beispielswiese mit einer Sägezahnmodulation, so dass die empfangenen Echosignale durch die Laufzeit zwischen Sender und Empfänger eine andere Frequenz aufweisen, als die zum Empfangsmoment gesendeten Signale. Je höher der Frequenzunterschied ist, desto weiter ist das Objekt entfernt.

Vorliegend wird insbesondere nur ein Teil eines solchen Radars, nämlich ein CWinsbesondere FMCW-Radarsensor betrachtet, der wie unten erläutert aufgebaut ist.

Aus der US 2020 / 0174098 A1 ist ein Verfahren bekannt für ein Radarsystem. Gemäß einer beispielhaften Implementierung umfasst das Verfahren das Erzeugen eines frequenzmodulierten RF-Oszillatorsignals und das Einspeisen des RF-Oszillatorsignals in einen ersten Sendekanal und einen zweiten Sendekanal. Das Verfahren umfasst weiterhin das Erzeugen eines ersten RF-Sendesignals im ersten Sendekanal basierend auf dem RF-Oszillatorsignal, das Aussenden des ersten RF-Sendesignals über eine erste Sendeantenne, das Empfangen eines ersten RF-Radarsignals über eine Empfangsantenne und das Umwandeln des ersten RF Radarsignal in ein Basisband, wodurch ein erstes Basisbandsignal erhalten wird, das einen ersten Signalanteil mit einer ersten Frequenz und einer ersten Phase aufweist, wobei der erste Signalanteil dem direkten Übersprechen der ersten Sendeantenne zuordenbar ist. Dieser Vorgang wird für den zweiten Sendekanal wiederholt.

Aus der EP 3 454 077 A1 ist ein Radargerät und ein Verfahren bekannt zum Betreiben des Radargeräts, wobei das Radargerät einen Sender und einen Empfänger aufweist, wobei das Verfahren umfasst: Erzeugen eines Chirp-Signals basierend auf einem lokalen Oszillatorsignal, wobei das LO-Signal ein frequenzmoduliertes Dauerstrichsignal ist; sekundäres Modulieren des Chirp-Signals, um ein Ausgangssignal zu erzeugen; Senden des Ausgangssignals auf einer Sendeantenne des Radargeräts; Empfangen eines Echosignals auf einer Empfangsantenne des Radargeräts; Heruntermischen einer verstärkten Version des Echosignals mit dem LO-Signal, um ein Niederfrequenzsignal zu erzeugen; und Ausgeben eines Fehlererkennungssignals basierend auf Spektralkomponenten des Niederfrequenzsignals, wobei die Spektralkomponenten dem sekundären Modulieren entsprechen.

Aufgabe der vorliegenden Erfindung ist es, Verbesserungen in Bezug auf CW-Radare vorzuschlagen.

Die Aufgabe wird gelöst durch ein Betriebsverfahren gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Ein Kalibrierverfahren dient zur Ermittlung einer Fehlerlaufzeit eines CW-, insbesondere FMCW-Radarsensors. Dabei wird davon ausgegangen, dass der Radarsensor folgende Struktur aufweist: Der Radarsensor weist einen Eingang auf, in den im Betrieb des Radarsensors ein Sendesignal eingespeist werden kann bzw. wird. Weiterhin existiert ein vom Eingang zu einer Sendeantenne führender Sendepfad und mindestens ein von einer Empfangsantenne zu einem Ausgang führender Empfangspfad. Innerhalb des Sendepfades existiert ein Knoten bzw. Abzweigpunkt, von dem einerseits der verbleibende Anteil des Sendepfades zur Sendeantenne führt und andererseits mindestens ein Querpfad abzweigt. In jedem Empfangspfad ist (sinngemäß vergleichbar zum Knoten oben) ein Mischer angeordnet. Je ein Querpfad führt vom Knoten zu jedem der Mischer. Somit handelt es sich vorliegend um eine homodyne Empfängerarchitektur.

Beim Betrieb des Radarsensors steht am Ausgang ein Ausgangssignal zur Verfügung, das weiterverarbeitet bzw. ausgewertet werden kann bzw. wird. Das Ausgangssignal ist erzeugt aus dem von der Empfangsantenne empfangenen Signal, das im Mischer mit dem über den Querpfad zugeführten Sendesignal zum Ausgangssignal gemischt wird bzw. ist. Das über die Emfpangsantenne empfangene Signal enthält insbesondere einen Anteil, der durch direktes Übersprechen des Sendesignals aus der Sendeantenne stammt und andererseits das von einem Ziel / Objekt reflektierte Sendesignal der Sendeantenne enthält.

Das Verfahren wird hier anhand eines FMCW-Radarsensors / -Radars dargestellt, kann jedoch auch auf andere Radarsysteme übertragen bzw. bei diesen angewendet werden, bei denen ein entsprechender Zusammenhang (wie er unten erläutert wird) zwischen Signallaufzeiten und Frequenzen besteht, d.h., dass Gruppenlaufzeiten von Signalen aus Frequenzen bzw. einer Frequenzanalyse des Ausgangssignals in der Art ermittelbar sind, wie es im Folgenden beschrieben wird.

Bei dem Verfahren wird der Radarsensor in einem Messbetrieb betrieben. In dem Messbetrieb wird wie folgt vorgegangen: Ein nach einem vorgegebenen bzw. vorgebbaren Modulationsschema (insbesondere spezielles Mess-Modulationsschema, verschieden von einem Modulationsschema in einem Operationsbetrieb des Radarsensors) erzeugtes FMCW-Sendesignal wird als Messsignal in den Eingang eingespeist. Das Modulationsschema ist also bekannt. Das Messsignal breitet sich im Radarsensor und dessen Umgebung wie folgt aus. Es gelangt vom Eingang zum Knoten. Einerseits breitet sich das Meßsignal vom Knoten aus als Quersignal über den Querpfad bis zum Mischer (auch "Empfangsmischer") aus. Andererseits durchläuft das Meßsignal vom Knoten aus als Übersprechsignal den restlichen Abschnitt des Sendepfades bis zur Sendeantenne, verlässt diese, spricht auf direktem Weg zur Empfangsantenne über, tritt in diese ein und folgt dem Abschnitt des Empfangspfades bis zum Mischer. Dort treffen Übersprechsignal und Quersignal wieder aufeinander, werden vom Mischer verrechnet und ergeben das Fehlersignal, welches über den restlichen Teil des Empfangspfades vom Mischer zum Ausgang gelangt. Dieses Fehlersignal entspricht der Differenzfrequenz aus Übersprechsignal und Quersignal.

Am Ausgang liegt damit das Fehlersignal als (Teil des) Ausgangssignal an, eventuell noch überlagert von sonstigen Signalanteilen im Ausgangssignal. Diese sind insbesondere die über die Empfangsantenne empfangenen von einem Ziel / Objekt reflektierten Anteile des Sendesignals, die im Mischer ebenfalls mit dem Quersignal gemischt werden. Insbesondere enthält das Ausgangssignal also auch einen Signalanteil, der von einer Reflexion des Sendesignals an einem Objekt stammt. Dieses wird jedoch vorzugsweise vermieden, sodass das Ausgangssignal insbesondere ausschließlich das Fehlersignal enthält. Insbesondere wird im Verfahren also sichergestellt, dass sich kein Objekt / Ziel in Reichweite des Radarsensors befindet, wenn der Messbetrieb durchgeführt wird.

Das durch das Messsignal am Ausgang erzeugte, insbesondere nur das Fehlersignal enthaltende Ausgangssignal wird digitalisiert und einem spektralen Filter zugeführt. Das Filter liefert ein dem Ausgangssignal (und damit auch dem Fehlersignal) entsprechendes Frequenzspektrum. Dabei wird insbesondere das Fehlersignal auf eine Fehlerfrequenz im Frequenzspektrum abgebildet. Diese Fehlerfrequenz, die dem Fehlersignal entspricht, wird im Frequenzspektrum identifiziert. Dies gelingt besonders einfach, wenn das Ausgangssignal eben nur das Fehlersignal enthält. Ansonsten kann die Fehlerfrequenz jedoch auch über Kriterien erkannt werden, die dem Fehlersignal wegen der bekannten Verhältnisse im Radarsensor innenwohnen.

Aus der Fehlerfrequenz wird auf Basis des bekannten (Mess-) Modulationsschemas nach dem üblichen Grundprinzip in CW- bzw. FMCW-Systemen (Rückschluss von Frequenzen auf Laufzeiten möglich) folgende Differenz von Gruppenlaufzeiten ermittelt (Ermittelt wird hierbei die Differenz als Ergebnis der Subtraktion, die Subtraktion selbst wird im Mischer durchgeführt):
Minuend der Differenz ist die Gruppenlaufzeit des Übersprechsignals vom Knoten über Sendepfad, Antennen (Übersprechen zwischen diesen) und Empfangspfad bis zum Mischer. Subtrahend ist die Gruppenlaufzeit des Quersignals vom Knoten über den Querpfad zum Mischer. Dabei wird wegen der grundlegenden Struktur eines Radarsensors angenommen, dass der Subtrahend kleiner ist als der Minuend. Andere Fälle sind jedoch auch möglich, Vorzeichen müssen dann entsprechend berücksichtigt werden, d.h. die Auswertung wird dann entsprechend angepasst. Die eigentliche tatsächliche Subtraktion dieser Gruppenlaufzeiten findet durch die Mischung von Übersprechsignal und Quersignal im Mischer statt, denn gebildet wird diese durch das "spätere" Eintreffen des Übersprechsignals am Mischer in Bezug auf das Quersignal, was durch den längeren Signalweg bzw. den Umweg über die Antennen für das Übersprechsignal verursacht ist. Die Differenz der Gruppenlaufzeiten wohnt somit dem Fehlersignal inne und entstammt der Mischung beider Signale mit dem entsprechenden Zeitversatz. Durch die Mischung und die anschließende Transformation in den Frequenzbereich wird dieser Zeitversatz, der der Fehlerlaufzeit entspricht, auf eine entsprechende charakteristische Frequenz, nämlich die Fehlerfrequenz übersetzt.

Aufgrund des bekannten Modulationsschemas kann von dieser Fehlerfrequenz auf die entsprechende Differenz der Gruppenlaufzeiten, die hier als Fehlerlaufzeit bezeichnet wird, zurückgeschlossen werden. Somit wird die genannte Differenz der Gruppenlaufzeiten als Fehlerlaufzeit des Radarsensors ermittelt. Die Fehlerlaufzeit in Form einer Gruppenlaufzeit stellt eine dem Radarsensor zum Zeitpunkt der Ermittlung eigene Eigenschaft dar, die unabhängig von der übertragenen Frequenz, Modulationsschema usw. ist. Insofern bildet das vorliegende Verfahren ein Kalibrierverfahren für den Radarsensor, denn dessen ihm eigene Fehlerlaufzeit kann ermittelt und in der Folge berücksichtigt werden. Somit ist der Radarsensor auf die aktuell geltende Fehlerlaufzeit kalibriert.

Dabei wird ein passendes Modulationsschema für das Messsignal gewählt. "Passend" bedeutet, dass unter Berücksichtigung der bekannten Eigenschaften des Radarsensors (dessen Hardware wie z.B. Filter, Bauteile / deren Bandbreiten, Frequenzeigenschaften, Dämpfungen usw. insbesondere im Analog- / Zeitbereich) ein Modulationsschema gewählt wird, welches das Fehlersignal im Rahmen der Frequenztransformation bei einer geeigneten Frequenz im Basisband abbildet. Dabei können auch a priori-Annahmen über die zu erwartenden Gruppenlaufzeiten im Radarsensor verwendet werden. Mit anderen Worten können auch Annahmen über das zu erwartende Fehlersignal usw. hier einfließen. Kriterien sind z.B. ein Modulationsschema mit einer möglichst steilen Anstiegsrampe, um wenige Nanosekunden Laufzeitdifferenz (Differenz der Gruppenlaufzeiten von Quersignal und Übersprechsignal) im Zeitbereich auf ein Fehlersignal im MHz-Bereich (Basisband) abzubilden.

Wie oben schon angedeutet, wird im Messbetrieb insbesondere sichergestellt, dass sich kein Objekt / Ziel in der vom Testsignal abhängigen aktuellen Reichweite / im Auswertefenster des Radarsensors befindet. Dies kann z.B. durch die geeignete Wahl eines Zeitpunktes erfolgen, in dem bekannterweise kein Ziel in Reichweite ist. Somit wird sichergestellt, dass das Ausgangssignal tatsächlich nur das Fehlersignal enthält, nicht jedoch noch eine zusätzliche Reflexion des Sendesignals von einem Ziel, die über die Empfangsantenne empfangen würde. Im Messbetrieb wird dann davon ausgegangen, dass sich kein solches Ziel in Reichweite des Radarsensors befindet. Ansonsten muss das Fehlersignal im Ausgangssignal aufwändiger identifiziert werden, was jedoch auch möglich wäre, jedoch diesen zusätzlichen Identifikationsschritt nötig machen würde.

Die ermittelte Fehlerlaufzeit wird nunmehr in einer, in einem Normalbetrieb / Operationsbetrieb des Radarsensors stattfindenden Entfernungsmessung zu einem detektierten Ziel zur Fehlerkompensation verwendet. Denn auch in Bezug auf das Ziel tritt die entsprechende Differenz der Gruppenlaufzeiten in Erscheinung, die jedoch den ermittelten Zielabstand verfälscht. Durch Kenntnis der Fehlerlaufzeit wird dieser Fehler korrigiert.

Es ergibt sich also ein bekannter fehlerhafter Entfernungsoffset für eine vorherige oder nachfolgende Entfernungsmessung, die mit Hilfe des Radarsensors durchgeführt wird. Aufgrund der Kenntnis dieses Offsets wird die Messung korrigiert, d.h. eine Korrektur des Entfernungsfehlers ist möglich.

Das Verfahren berücksichtigt das Übersprechen zwischen Sende- und Empfangsantenne, das im Rahmen des Verfahrens insbesondere sogar erwünscht ist, um ein möglichst starkes Übersprechsignal zu erhalten. Bei einem Radarsensor, der für die Ausführung des vorliegenden Verfahrens eingerichtet ist bzw. für den dieses vorgesehen ist, kann daher insbesondere auf entsprechende Maßnahmen zur Verhinderung von Übersprechen zwischen Sende- und Empfangsantenne verzichtet werden.

In einer bevorzugten Ausführungsform des Verfahrens wird davon ausgegangen, dass der Radarsensor mindestens zwei Empfangspfade enthält. Jeder dieser Empfangspfade ist wie oben beschrieben aufgebaut, d.h. führt von einer jeweiligen Empfangsantenne über einen jeweiligen Mischer zu einem jeweiligen Ausgang. Je ein Querpfad führt vom gemeinsamen Knoten zum Mischer eines jeden der

Empfangspfade. In bzw. gemäß dem sinngemäß oben beschriebenen Verfahren wird für jeden der Empfangspfade dessen jeweilige Fehlerlaufzeit ermittelt. Die

Gruppenlaufzeiten der Mess- / Übersprechsignale für die einzelnen Antennenwege (Sende- / jeweilige Empfangsantenne) und Abschnitte der Empfangspfade bis zum Mischer können sich unterscheiden, da zum Beispiel unterschiedliche Laufzeiten von der Sendeantenne zur jeweiligen Empfangsantenne vorhanden sind oder Unterschiede in den Empfangspfaden oder Mischern (Bauteiltoleranzen, ...) bestehen. Somit wird die Korrektur von Entfernungsfehlern bei der Vermessung von Zielobjekten in jedem einzelnen Empfangspfad möglich. Insbesondere sind auch nur mehrere, nicht alle Empfangspfade entsprechend aufgebaut. Alternativ oder zusätzlich wird insbesondere nur für mehrere, jedoch nicht alle Empfangspfade die jeweilige Fehlerlaufzeit ermittelt. Ein entsprechender Radarsensor wird also hinsichtlich mehrerer oder all seiner Empfangspfade kalibriert.

In einer bevorzugten Ausführungsform wird das Verfahren bei einem Radarsensor durchgeführt, der eine monostatische oder quasi-monostatische Antennenanordnung aus Sende- und (einer oder mehreren, je nach Anzahl der Empfangsantennen / -pfade) Empfangsantennen aufweist. Bei derartigen Antennenanordnungen tritt ein besonders starkes Übersprechen zwischen Sende- und Empfangsantenne auf. Für den Fall, dass wie oben erläutert auf Maßnahmen zur Verhinderung eines Übersprechens zwischen Sende- und Empfangsantenne verzichtet wird, wirkt sich das vorliegende Verfahren besonders vorteilhaft auf entsprechende Antennenanordnungen aus, da diese üblicherweise in der Regel besonders aufwendig gegen dieses Übersprechen abgesichert werden müssen. In einem Kalibrierbetrieb (Meßbetrieb) ist dieses Übersprechen gewünscht, um die Fehlerlaufzeit möglichst gut ermitteln zu können. Im Normalbetrieb / Operationsbetrieb ist ein Übersprechen jedoch nicht gewünscht. Maßnahmen gegen das bzw. zur Unterdrückung des Übersprechens werden daher insbesondere nur im Normalbetrieb / Operationsbetrieb ergriffen bzw. aktiviert, jedoch nicht im Meßbetrieb.

In einer bevorzugten Ausführungsform des Verfahrens wird das Frequenzspektrum aus dem Ausgangssignal im spektralen Filter mit Hilfe einer Fourier-Transformation erzeugt. Insbesondere handelt es sich dabei um eine FFT (Fast Fourier Transform). Derartige Filter bzw. Transformationen sind mannigfaltig verfügbar und daher besonders einfach umsetzbar.

In einer bevorzugten Ausführungsform des Verfahrens wird ein Schwellwert für das Frequenzspektrum vorgegeben. Eine Frequenz eines Spektralanteils des Spektrums, der über dem Schwellwert liegt, wird dann als Fehlerfrequenz identifiziert. Die Fehlerfrequenz kann damit besonders einfach identifiziert werden. Der Schwellwert kann insbesondere empirisch ermittelt werden, z.B. in Vorversuchen für einen bestimmten Radarsensor. Insbesondere wird der Schwellwert so vorgegeben, dass erwartungsgemäß nur einzige Frequenz / Spektralanteil im Frequenzspektrum eine entsprechende Größe oberhalb des Schwellwertes aufweist. Dies gilt insbesondere, falls nicht ausgeschlossen werden kann, dass weitere Frequenzen im Frequenzspektrum enthalten sind, die zum Beispiel durch empfangene Reflexionen des Meßsignals von Zielen verursacht sind. Auch hier ergibt sich ein Vorteil, wenn auf Maßnahmen zur Übersprechunterdrückung zwischen den Antennen verzichtet wird: So wird nämlich ein möglichst starkes Übersprechsignal erzeugt, das dann erwartungsgemäß größer als jedes von einem Ziel reflektierte Empfangssignal ist. Der Schwellwert kann insbesondere für einen jeweiligen bekannten Anwendungsfall ermittelt bzw. vorgegeben werden, z.B. wenn ein bestimmter Radarsensor in einem bestimmten Flugkörper fertig verbaut ist.

Als "vorgebbarer Schwellwert" kann insbesondere auch nach dem Maximalwert im Spektrum gesucht werden. Dann handelt es sich zwar streng genommen nicht mehr um einen Schwellwert, der vorgegeben werden muss, sondern um den tatsächlichen Maximalwert aller im Spektrum vorhandenen Frequenzanteile. Dies vereinfacht die Suche nach der Fehlerfrequenz, da das Maximum im Spektrum eindeutig ist, während bei einem gegebenen Schwellwert in ungünstigen Fällen bzw. bei zu niedrigem Schwellwert auch mehrere unterschiedliche Frequenzanteile über dem Schwellwert liegen könnten. Das Ergebnis wäre dann nicht eindeutig; dies kann bei der Suche nach dem Maximalwert vermieden werden.

Die Aufgabe der Erfindung wird gelöst durch ein Betriebsverfahren gemäß Patentanspruch 1 zum Betreiben eines CW- insbesondere FMCW-Radarsensors. Dabei wird davon ausgegangen, dass der Radarsensor so aufgebaut ist, wie es im Zusammenhang mit dem oben beschriebenen Kalibrierverfahren zur Ermittlung der Fehlerlaufzeit erläutert wurde. In dem Verfahren wird die Fehlerlaufzeit nach dem oben erläuterten Kalibrierverfahren ermittelt. Hierzu wird, wie ebenfalls oben erläutert, der Radarsensor in einem Meßbetrieb betrieben. Daneben - d.h. wenn der Radarsensor nicht im Meßbetrieb betrieben wird - wird der Radarsensor im Betriebsverfahren auch in einem vom Meßbetrieb verschiedenen Operationsbetrieb betrieben. Im Operationsbetrieb werden potentielle Ziele in dem Grunde nach bekannter Art und Weise gesucht bzw. detektiert und eine Entfernung zu einem detektierten Ziel ermittelt. Die Entfernung zum Ziel bezieht sich dabei auf den Radarsensor bzw. dessen Antennenebene (Sende- und Empfangsantenne). Die Entfernungsermittlung wird jedoch im Vergleich zur bekannten Art und Weise (Empfangssignale mit Zielsignal aus dem Sendesignal, Mischung, Frequenzspektrum des Ausgangssignals, Zielfrequenz im Spektrum, Umrechnung in Laufzeit, Umrechnung in Entfernung, wie sinngemäß oben erläutert) modifiziert durchgeführt, indem nämlich die im Meßbetrieb ermittelte Fehlerlaufzeit bei der Ermittlung der echten, tatsächlichen Entfernung (Operationsbetrieb / Normalbetrieb) berücksichtigt wird.

Im Operationsbetrieb wird also ein Sendesignal in den Eingang gespeist und das hieraus resultierende Ausgangssignal am Ausgang unter Nutzung der aus dem Kalibrierverfahren bekannten Fehlerlaufzeit aufgewertet. Das Kalibrierverfahren kann hierbei entweder vor oder nach (zumindest einem Teil des) dem Operationsbetrieb, jedenfalls vor der Ermittlung der Zielentfernung, ausgeführt werden.

Mit anderen Worten wird also die im Operationsbetrieb auftretende fehlerhafte Differenz der Gruppenlaufzeiten zweier Signale im Radarsensor bei der Entfernungsermittlung berücksichtigt: Im Operationsbetrieb sind dies einerseits die Gruppenlaufzeit des Quersignals (operationelles Sendesignal) zwischen Knoten und Mischer, wie es oben auch für das Messsignal beschrieben wurde, als Subtrahend. Als Minuend tritt hier die Gruppenlaufzeit des Sendesignals vom Knoten bis zur Sendeantenne, von der Empfangsantenne bis zum Mischer und ein dritter Anteil auf. Das Sendesignal legt als dritten Anteil nämlich außerdem einen "Dreiecksweg" zurück, nämlich verlässt es die Sendeantenne, legt einen Weg zum Ziel sowie einen Weg vom Ziel zur Empfangsantenne zurück. Wegen der Entfernung von Sendeantenne und Empfangsantenne zueinander enthält dieser "Dreiecksweg" in vereinfachter Weise die Summe aus a) der exakten selben Wegstrecke von der Antennenebene zum Ziel und b) dem Weg zwischen Sende- und Empfangsantenne. Die Gruppenlaufzeit über letzteren Weg soll ebenfalls dem Minuenden zugerechnet werden. Dieser Weg entspricht jedoch exakt dem Übersprechweg des zwischen Sende- und Empfangsantenne übersprechenden Signals im Meßbetrieb. Insofern ergeben sich hier die selben Verhältnisse wie im Meßbetrieb und die dort ermittelte Fehlerlaufzeit entspricht exakt dem gewünschten Korrekturwert für den Operationsbetrieb.

Unter Berücksichtigung der Fehlerlaufzeit ergibt sich somit eine besonders exakte Möglichkeit zur Entfernungsbestimmung eines Ziels von der Antennenebene des Radarsensors im Operationsbetrieb.

Das Betriebsverfahren und zumindest ein Teil dessen möglicher Ausführungsformen sowie die jeweiligen Vorteile wurden sinngemäß bereits im Zusammenhang mit dem Kalibrierverfahren erläutert.

In dem Betriebsverfahren wird im Operationsbetrieb das Sendesignal nach einem vom ersten Modulationsschema des Messbetriebes verschiedenen zweiten Modulationsschema erzeugt. Somit ist es möglich, sowohl im Meßbetrieb als auch im Operationsbetrieb jeweils ein auf die vorherrschenden Gegebenheiten angepasstes Modulationsschema zu wählen. Auslegungskriterien für den Meßbetrieb bzw. das erste Modulationsschema wurden oben bereits erläutert. Auslegungskriterien für das zweite Modulationsschema sind dabei insbesondere die verwendeten Radarfrequenzen, Signalleistungen, Annahmen über wunschgemäß zu detektieren Ziele bzw. deren zu erwartende Geschwindigkeitsbereiche, gewünschte Entfernungsbereiche zur Zieldetektion usw.

In dem Betriebsverfahren wird die im Meßbetrieb ermittelte Fehlerlaufzeit in eine dem zweiten Modulationsschema entsprechende Fehlerfrequenz abgebildet. Dies kann - in umgekehrter Reihenfolge wie oben zum Meßbetrieb erläutert (Umrechnung der Fehlerfrequenz in die Fehlerlaufzeit) - unter Kenntnis der Charakteristiken des zweiten Modulationsschemas geschehen. Im Operationsbetrieb wird dann ein aus dem Ausgangssignal des Radarsensors erzeugtes Frequenzspektrum um die Fehlerfrequenz verschoben. Dieses verschobene Frequenzspektrum wird anschließend zur Bestimmung einer Entfernung zum Ziel ausgewertet. Da die Frequenz der im Frequenzspektrum des Ausgangssignal vorhandenen Anteile die jeweilige Entfernung eines zu dem jeweiligen Anteil gehörenden Ziels zum Radarsensor (dessen Antennenebene) entspricht, erfolgt durch die Frequenzkorrektur auch eine Entfernungskorrektur.

Diese Entfernungskorrektur ist somit im um die Fehlerfrequenz verschobenen und somit korrigierten Frequenzspektrum bereits enthalten. Das verschobene Frequenzspektrum kann daher in herkömmlicher Weise ausgewertet werden, ohne eine weitere Fehlerkorrektur durchführen zu müssen. Mit anderen Worten können etablierte und bekannte Auswerteverfahren wie üblich auf das verschobene Frequenzspektrum angewendet werden, da die hier vorgeschlagene Fehlerkorrektur bereits bei der Verschiebung des Frequenzspektrums im Frequenzbereich erfolgt ist.

In einer bevorzugten Ausführungsform des Verfahrens wird der Messbetrieb in einer Aktivierungsphase des Radarsensors für den Operationsbetrieb ausgeführt. Die Aktivierungsphase für den Operationsbetrieb ist diejenige, die dem Operationsbetrieb vorausgeht und bei der der Radarsensor z.B. eingeschaltet oder anderweitig in Betrieb / Bereitschaft gesetzt wird bzw. für einen Einsatz vorbereitet wird. Dabei wird insbesondere auf die Randbedingungen geachtet, dass sich zur Zeit der Durchführung des Messbetriebs kein potentielles Ziel in Reichweite des Radarsensors befindet, d.h. kein Zielsignal im Auswertefenster eines Auswerteverfahrens vorhanden ist. Insbesondere wird der Meßbetrieb in jeder Aktivierungsphase des Radarsensors ausgeführt. Somit wird in der Aktivierungsphase die aktuell im Radarsensor vorherrschende Fehlerlaufzeit ermittelt, ein - insbesondere unmittelbar nachfolgender - Operationsbetrieb findet daher mit der aktuellsten Fehlerkorrektur bezüglich einer eventuell vorhandenen Fehlerlaufzeit statt. Entfernungsberechnungen zu einem Ziel können so besonders genau durchgeführt werden. Durch Ausführung des Messbetriebs in der Aktivierungsphase können die aktuellen Betriebsbedingungen des Radarsensors mit in die Fehlerlaufzeit einbezogen werden, z.B. die aktuelle Umgebungstemperatur, Betriebstemperatur, Luftfeuchtigkeit, Alterungszustand von Bauteilen usw. des Radarsensors.

In einer bevorzugten Ausführungsform wird im Operationsbetrieb ein bzw. das Sendesignal für den Operationsbetrieb des Radarsensors als Messsignal genutzt. Die im Messbetrieb normalerweise anhand des Messsignals durchgeführten Schritte werden dann auch im Operationsbetrieb durchgeführt. Im Operationsbetrieb findet also sowohl eine operationelle Auswertung des Ausgangssignals statt, d.h. es wird nach Zielen im Ausgangssignal gesucht und deren Entfernung zur Antennenebene bestimmt. Nebenbei / parallel hierzu wird auch eine Auswertung wie oben beschrieben hinsichtlich der Fehlerlaufzeit durchgeführt. Wie oben beschrieben wird bei der operationellen Auswertung des Spektrums auf die Fehlerlaufzeit zurückgegriffen und diese zur Korrektur ermittelter Entfernungen genutzt. Neben der operationellen Auswertung des Ausgangssignals wird jedoch auch - wenn möglich - die aktuelle Fehlerlaufzeit aus dem Ausgangssignal ermittelt. "Wenn möglich" ist dabei folgendermaßen zu verstehen: Das operationelle Sendesignal wird nach einem für den Operationsbetrieb optimierten Modulationsschema erstellt. Dabei kann nicht sichergestellt werden, dass das Übersprechsignal im Spektrum des Ausgangssignals zuverlässig erscheint, erkannt und/oder ausgewertet werden kann. In günstigen Fällen ist dies aber möglich ("wenn möglich"). Dann kann sich auch die oben erläuterte Auswertung anschließen und eine aktuelle - eventuell korrigierte - Fehlerfrequenz / Fehlerlaufzeit ermittelt werden. Alternativ kann zumindest eine vorab ermittelte Fehlerlaufzeit kontrolliert / überprüft werden und z.B. grobe Abweichungen erkannt werden. So kann z.B. auch ein erneuter Messbetrieb angefordert werden, in dem dann wieder ein spezielles Messsignal erzeugt wird. Eine neu ermittelte Fehlerlaufzeit kann dann auch anstelle einer früher ermittelten Fehlerlaufzeit für die aktuelle und/oder zukünftige Korrektur von ermittelten Zielentfernungen verwendet werden. So ist eine "online"-Fehlerkontrolle / -messung und -Korrektur ermöglicht, die die stets aktuellsten Eigenschaften des Radarsensors berücksichtigt.

Die Erfindung beruht auf folgenden Erkenntnissen, Beobachtungen bzw. Überlegungen und weist noch die nachfolgenden Ausführungsformen auf.

Die Erfindung beruht auf der Grundidee, dass ein Radarsensor, insbesondere ausgelegt als Nah- und Nächstbereichssensor für Luft-Luft-Anwendungen, in hochdynamischen Annäherungssituationen präzise absolute Entfernungen im Bereich kleiner 0,5m Ortsauflösung messen können soll. Die Erfindung beruht auf der Beobachtung, dass der durch die Gruppenlaufzeiten im Sende- und Empfangspfad verursachte Entfernungs-Offset (Fehlmessung aufgrund der Differenz der Gruppenlaufzeiten von Übersprechsignal und Quersignal) zu falschen Entfernungsmessungen führt und deshalb zu kompensieren ist.

Die Erfindung beruht weiterhin auf der Beobachtung aus der Praxis, dass der Entfernungsoffset aufgrund von internen Latenzen in der Mehrzahl der Anwendungen nicht berücksichtigt wird, da die Latenzen zumeist innerhalb der Entfernungsauflösung von FMCW-Sensoren liegen oder aber eine absolute Messung der Entfernungen mit hoher Präzision nicht erforderlich ist.

Die Erfindung beruht auch auf der Erkenntnis, dass die Überkopplung von Sendesignalen in den Empfangspfad (zwischen Sende- und Empfangsantenne) insbesondere bei monostatischen oder auch quasi monostatischen (Sende- und Empfangsantennen getrennt, aber in unmittelbarere Nähe zueinander) Dauerstrich-Radarsystemen bekannt ist. Diese Überkopplung bildet sich im Empfänger als Fehlersignal ab und führt aufgrund der zumeist signifikanten Leistungen typischerweise zu einer nachteiligen Beeinflussung der Empfängerempfindlichkeit (allgemeines Fachwissen, siehe z.B. "Principles Of Modern Radar", Jerry Eaves / Edward Reedy, Springer Verlag, 1st. ed., 1987). In der Literatur ist dieser Effekt bekannt und wird entweder durch weitere Erhöhung des Abstandes der Sende- / Empfangs-Antennen auch unter zu Hilfenahme von Absorbern oder durch z.B. Verringerung der Sendeleistungen ausreichend unterdrückt.

Die Erfindung beruht auf folgender grundlegender Idee: Die internen Gruppenlaufzeiten bzw. Latenzen durch die entstehenden Durchlaufzeiten der Signale auf Leitungen und in Bauteilen wie z. B. Filterstrukturen in den Sende- und Empfangskanälen (Sende- / Empfangspfad) werden durch Ausnutzung der Überkopplung (Übersprechen an den Antennen) direkt gemessen. Diese Messung geschieht z.B. in einem speziellen Messmodus vor dem eigentlichen / operationellen Radarbetrieb (Messbetrieb vor dem Operationsbetrieb). Diese Messung erfolgt derart vorzugsweise in einer Aktivierungsphase des Radarsensors, in der noch kein Zielsignal im Auswertefenster vorhanden ist. Die gemessene Latenz (Differenz der Gruppenlaufzeiten) bildet sich als Entfernungsoffset (Fehlerlaufzeit, umgerechnet in einen Entfernungsfehler) nahe der Nullentfernung (Frequenzoffset im Spektrum / Basisband) ab. Er kann bei hinreichend starkem Pegel wahlweise in dem nachfolgenden operationellen Betrieb ständig weiterverfolgt und gemessen werden (Sendesignal im Operationsbetrieb als Messsignal) oder es erfolgt die einmalige Messung (spezieller Messbetrieb) und der ermittelte Offset wird - z.B. in einem Rechner-Speicher - abgelegt und im Zuge der nachfolgenden Signalverarbeitung (Ooperationsbetrieb) als fester Entfernungs-Fehlerwert einbezogen.

Gemäß der Erfindung ergibt sich der Vorteil einer Korrektur bzw. Kalibrierung der Entfernungsmessgenauigkeit intern im Radarsensor bzw. im Radarsystem, das den Radarsensor enthält, und während des operationellen Betriebs. Fehler aufgrund von Temperatur und Alterung der Bauteile werden damit weitgehend kompensiert.

Grundidee der Erfindung ist die Verwendung des Koppelsignals (Übersprechen zwischen den Sende- / Empfangsantennen) als Kalibrier- bzw. Korrektursignal für die Entfernungsmessung.

Gemäß der Erfindung wird - insbesondere vor der Aktivierung des operationellen Betriebs (Operationsbetrieb) - der Radarsensor in einen speziellen Messmodus (Messbetrieb) versetzt. Typischerweise befindet sich in der Luft-Luft-Anwendung zu dieser Zeit kein weiteres Signal im Auswertefenster, also kein potentielles Ziel in Reichweite des Radarsensors in Bezug auf das im Messmodus gewählte Modulationsschema. In diesem Messmodus wird ein hierfür passendes Modulationsschema gewählt, welches das Fehlersignal bei einer geeigneten Frequenz im Basisband des Empfängers abbildet. Das bandbegrenzte Basisbandsignal wird digitalisiert und in einem spektralen Filter, vorzugsweise mit Hilfe einer Fourier-Transformation, verarbeitet. Das Fehlersignal (Spektralanteil bei der Fehlerfrequenz) zeigt sich aufgrund der hinreichenden Signalleistung oberhalb einer Entscheidungsschwelle (Schwellwert) und wird entsprechend der Lage im Spektrum (einer Laufzeit und damit) einer Entfernung - dem Entfernungs-Offset - zugeordnet. Der ermittelte Frequenz- und damit Entfernungsoffset wird wahlweise für weitere Korrekturen gespeichert. Dabei wird gegebenenfalls die Frequenz des Messbetriebs über die Modulationsschemata in eine für den Operationsbetrieb geltende Frequenz umgerechnet.

Die vorliegende Erfindung beschreibt also zusammenfassend die Vorgehensweise der Kalibrierung eines Radarsensors mit Kompensation des Entfernungsfehlers durch Messung des Koppelsignals, welches FMCW-typisch aufgrund interner Signalpfade zwischen dem Sende- und einem oder mehreren Empfangskanälen verursacht wird.

Gemäß der Erfindung ergibt sich ein Kalibrierverfahren bei Dauerstrichradaren hoher Ortsauflösung, insbesondere FMCW-Radaren, und ein entsprechend dieses Kalibrierverfahren einschließendes Betriebsverfahren.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: einen Radarsensor mit einem Sende- und zwei Empfangspfaden in einem Messbetrieb mit darin auftretenden Signalen,
- Figur 2: Signale auf Figur 1 im Frequenzbereich,
- Figur 3: das Mischen von Quersignal und Übersprechsignal im Zeit- und Frequenzbereich,
- Figur 4: das Mischen aus Figur 3 im Frequenzbereich,
- Figur 5: Signale in einem Operationsbetrieb des Radarsensors aus Figur 1 im Frequenzbereich mit Fehlerkorrektur für eine Ziel-Abstandsmessung.

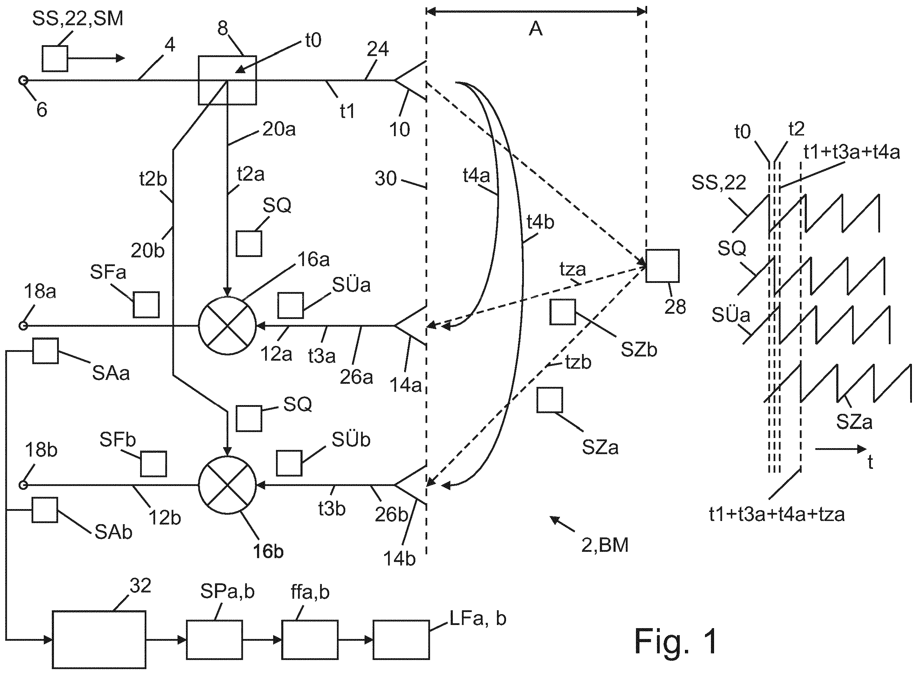

Figur 1 zeigt in einem stark vereinfachten Prinzipbild einen Radarsensor 2, hier einen FMCW-Radarsensor. Dieser enthält einen Sendepfad 4, der von einem Eingang 6 über einen Knoten 8 zu einer Sendeantenne 10 führt. Der Radarsensor 2 enthält auch mehrere, hier zwei, getrennte Empfangspfade 12a,b, die von einer jeweiligen Empfangsantenne 14a,b über einen jeweiligen Mischer 16a,b zu einem jeweiligen Ausgang 18a,b führen. Weiterhin enthält der Radarsensor 2 für jeden der Empfangspfade 14a,b je einen, hier zwei, Querpfade 20a,b, die vom Knoten 8 jeweils zu einem der Mischer 16a,b führen. Sendeantenne 10 und Empfangsantennen 14a,b sind im Radarsensor 2 nach Art einer quasi-monostatischen Antenne vergleichsweise nah beieinander angeordnet.

Figur 1 veranschaulicht ein Kalibrierverfahren, bei dem der Radarsensor 2 in einem Messbetrieb BM betrieben wird. Im Messbetrieb BM wird ein Sendesignal SS, hier ein FMCW- Sendesignal nach einem vorgegebenen Modulationsschema 22 erzeugt und als Messsignal (SM) in den Eingang 6 bzw. den Sendepfad 4 in der durch einen Pfeil angedeuteten Richtung eingespeist. Das Modulationsschema 22 ist hier eine Sägezahn- oder Rampenmodulation mit möglichst steiler Anstiegszeit, wie es in Figur 1 im Zeitbereich (Signalverlauf über der Zeit t) dargestellt ist. "Möglichst steil" bedeutet, dass eine möglichst hohe Steilheit gewählt wird, die im Rahmen der hier nicht näher erläuterten Bauteileigenschaften des Radarsensors 2 und einer sich anschließenden Signalverarbeitung (spektrales Filter 32, siehe unten) technisch realisierbar ist, um noch eine ausreichende Signalqualität / Signalverarbeitung sicherzustellen.

Das Sendesignal SS ist in Figur 1 im Zeitbereich über der Zeit t qualitativ dargestellt, wobei ein Zeitpunkt t0=0 derjenige Zeitpunkt ist, an dem die in Figur 1 dargestellte fallende Flanke des Sendesignals SS den Knoten 8 passiert.

Vom Knoten 8 aus breitet sich das Sendesignal SS einerseits als Quersignal SQ über den jeweiligen Querpfad 20a,b zum jeweiligen Mischer 16a,b aus. Hierfür benötigt es eine Laufzeit in Form einer Gruppenlaufzeit t2a,b. Die o.g. Signalflanke trifft daher zum Zeitpunkt t=t2a,b am Mischer 16a,b ein.

Andererseits breitet sich das Sendesignal SS vom Knoten 8 aus als Übersprechsignal SÜa,b auch über das restliche Teilstück 24 des Sendepfades 4 Zwischenknoten 8 und Sendeantenne 10 zu dieser hin aus. Hierfür benötigt es eine Gruppenlaufzeit t1. An der Sendeantenne 10 wird das Übersprechsignals SÜa,b abgestrahlt. Durch direktes Übersprechen zwischen Sendeantenne 10 und Empfangsantennen 14a,b - in Figur 1 durch Doppelpfeile angedeutet - breiten sich die Übersprechsignale SÜa,b mit den jeweils benötigten Gruppenlaufzeiten t4a,b zu den Empfangsantennen 14a,b hinaus und werden dort empfangen und in die Empfangspfade 12a,b eingespeist. Sie durchlaufen die Teilstücke 26a,b der Empfangspfade 12a,b zwischen den Empfangsantennen 14a,b und Mischern 16a,b und benötigen hierfür die Gruppenlaufzeiten t3a,b.

An den Mischern 16a,b erfolgt schließlich die Mischung der Übersprechsignale SÜa,b mit den jeweiligen Quersignalen SQ zu einem jeweiligen Fehlersignal SFa,b. Ein am jeweiligen Ausgang 18a,b zur Weiterverarbeitung zur Verfügung stehendes Ausgangssignal SAa,b, dass schlussendlich durch das Sendesignal SS erzeugt ist, enthält das jeweilige Fehlersignal SFa,b. Daneben enthält es weitere Anteile, die über die Empfangsantennen 14a,b empfangen wurden, zum Beispiel ein von einem Ziel 28 zu der jeweiligen Empfangsantenne 14a,b reflektiertes Zielsignal SZa,b. Das Zielsignal SZa,b benötigt dabei eine Laufzeit tz von der in Figur 1 gestrichelt angedeuteten Antennenebene 30 des Radarsensors 2 zum Ziel 28 hin und zurück.

Figur 1 veranschaulicht am Beispiel des Empfangspfades 12a im Zeitbereich über der Zeit t, wie das Sendesignal SS zum Zeitpunkt t0=0 den Knoten 8 passiert, zum Zeitpunkt t2a,b das Quersignal SQ den Mischer 16a erreicht, zum Zeitpunkt t1+t3a+t4a das Übersprechsignal SÜa den Mischer 16a erreicht und zum Zeitpunkt t1+t3a+t4a+tza das Zielsignal SZa den Mischer 16a erreicht.

Wie in Figur 1 nur vereinfacht angedeutet ist, wird das jeweilige Ausgangssignal SAa,b einem spektralen Filter 32 zugeführt. Dieses liefert ein dem jeweiligen Ausgangssignal SAa,b entsprechendes Frequenzspektrum SPa,b. Gemäß dem Kalibrierverfahren wird eine jeweilige Fehlerfrequenz ffa,b im jeweiligen Frequenzspektrum SPa,b identifiziert, die dem jeweiligen Fehlersignal SFa,b entspricht. Die Fehlerfrequenz ffa,b wird dadurch erzeugt, dass die zu verschiedenen Zeitpunkten eintreffenden Quersignale SQ und Übersprechsignale SÜa,b im jeweiligen Mischer 16a,b miteinander und in das Basisband herunter gemischt werden. Dabei entspricht die jeweilige Fehlerfrequenz ffa,b der jeweiligen Differenz zwischen den Gruppenlaufzeiten der Übersprechsignale SÜa,b als Minuend (t1+t4a,b+t3a,b) und der Gruppenlaufzeit des Quersignals SQ als Subtrahend (t2a,b). Die Fehlerfrequenz ffa,b entstammt also dem Zeitversatz (t1 + t4a,b + t3a,b) - t2a,b.

Nach dem üblichen, hier nicht näher erläuterten, FMCW- (oder vergleichbaren) Radarverfahren werden die entsprechenden Frequenzen bzw. Frequenzanteile im Frequenzspektrum SPa,b der Ausgangssignale SAa,b in Laufzeiten des Zielsignals SZ identifizierter Ziele 28 umgerechnet (Laufzeit des Zielsignals SZ für die Zurücklegung des doppelten = Hin- und Rückweges) Abstandes des Ziels 28 von der Antennenebene 30. Hierzu wird auf das bekannte Modulationsschema 22 zurückgegriffen. Nach dem selben Prinzip wird daher die identifizierte Fehlerfrequenz ffa,b in eine Fehlerlaufzeit LFa,b umgerechnet. Diese Fehlerlaufzeiten LFa,b entsprechen daher den oben erläuterten Differenzen der Gruppenlaufzeiten (t1+t4a,b+t3a,b) - t2a,b. Bekannt ist also nun die Fehlerlaufzeit LFa,b, die auch jedem Zielsignal SZa,b im Ausgangssignal SAa,b innewohnt und jeweils zu einem Entfernungsfehler FEa,b für eine jeweilige Bestimmung eines Abstandes A von Zielen 28 zur Antennenebene 30 innewohnt.

Dank des Kalibrierverfahrens ist diese Fehlerlaufzeit LFa,b nun bekannt und Zielentfernungen, d.h. Abstände A können entsprechend korrigiert werden.

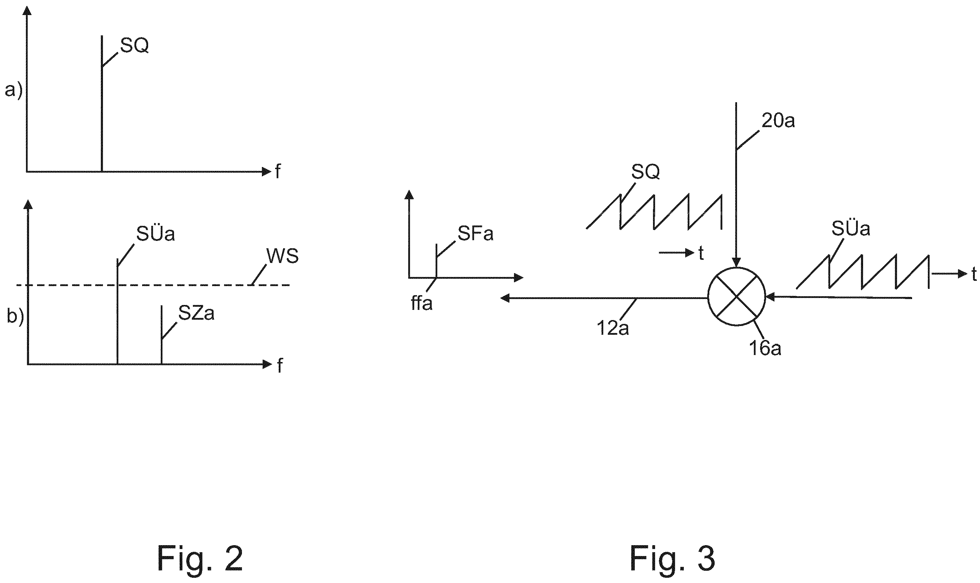

Figur 2 zeigt im Frequenzbereich über der Frequenz f die Spektren des a) Quersignals SQ sowie des Übersprechsignals SÜa und des Zielsignals SZa am Mischer 16a.

Figur 3 zeigt das Quersignal SQ sowie das Übersprechsignal SÜa am Mischer 16a, angedeutet im Zeitbereich über der Zeit t sowie das betreffende Mischergebnis, nämlich das Fehlersignal SFa als Teil des Ausgangssignals SAa im Frequenzbereich über der Frequenz f im Basisband, also bei der Fehlerfrequenz ffa.

In Figur 2 ist außerdem ein Schwellwert WS eingetragen. Aufgrund des direkten Übersprechens des Übersprechsignals SÜa,b in der Antennenebene 30 ist die Amplitude dieser Signale verglichen mit einem Zielsignal SZa,b vergleichsweise hoch. Bei einem geeignet gewählten Schwellwert WS kann daher das Fehlersignal SF anhand einer Amplitudenauswertung des Spektrums ermittelt werden, indem derjenige Frequenzanteil, dessen Amplitude über dem Schwellwert WS liegt, als derjenige des Fehlersignals SFa,b und damit die Fehlerfrequenz ffa,b identifiziert wird.

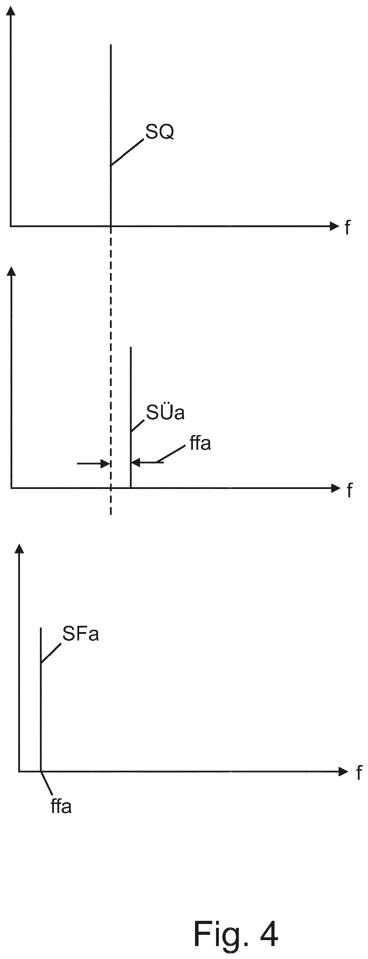

Figur 4 zeigt die Frequenzspektren aus Figur 2 und 3 nochmals im Zusammenhang und frequenzrichtig übereinander angeordnet. Dabei ist zu erkennen dass die Fehlerfrequenz ffa genau der Differenzfrequenz zwischen der Frequenz des Übersprechsignals SÜa und des Quersignals SQ vor dem Mischer 16a,b entspricht.

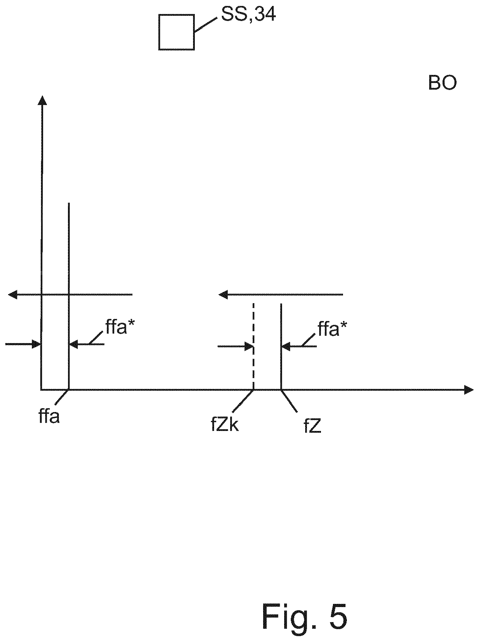

Figur 5 verdeutlicht, wie die Kenntnis der aus der Fehlerfrequenz ffa,b errechnete Fehlerlaufzeit LFa,b besonders einfach genutzt werden kann, um die Korrektur eines Entfernungsfehlers für ein identifiziertes Ziel 28 durchzuführen.

Hierbei befindet sich der Radarsensor zwei in einem Operationsbetrieb BO. Der oben erläuterte Messbetrieb BM ist dem Operationsbetrieb BO vorausgegangen. Im Operationsbetrieb BO wird dem Eingang 6 in hier nur symbolisch dargestellter Weise ein alternatives Sendesignal SS eingespeist, welches nämlich nach einem anderen Modulationsschema 32 erzeugt wurde. Im Modulationsschema 32 existieren andere Zusammenhänge zwischen Zeitsignalen und Spektren, d.h. den im Meßbetrieb BM identifizierten Fehlerlaufzeiten LFa,b werden hier Fehlerfrequenzen ffa,b* zugeordnet, die von den Fehlerfrequenzen ffa,b gegebenenfalls verschieden sind.

Figur 5 zeigt das vom spektralen Filter 32 erzeugte Frequenzspektrum, in dem die Fehlerfrequenz ffa* sowie die ermittelte Zielfrequenz fZ eingetragen sind.

Durch eine in Figur 5 als Pfeil angedeutete Frequenzverschiebung des gesamten Spektrums um die Fehlerfrequenz ffa* nach unten wird auch die Zielfrequenz FZ nach unten zur korrigierten Zielfrequenz fZk verschoben. Das verschobene Frequenzspektrum kann nun in herkömmlicher Weise nach einem FMCW-Auswerteverfahren ausgewertet werden, um zur Zielfrequenz fZk eine zugehörige Zielentfernung zu ermitteln. Diese ist nunmehr gegenüber der Auswertung der Zielfrequenz Fz um den Entfernungsfehler FEa korrigiert und entspricht dem tatsächlichen Abstand A.

### Bezugszeichenliste

- 2: Radarsensor
- 4: Sendepfad
- 6: Eingang
- 8: Knoten
- 10: Sendeantenne
- 12a,b: Empfangspfad
- 14a,b: Empfangsantenne
- 16a,b: Mischer
- 18a,b: Ausgang
- 20a,b: Querpfad
- 22: Modulationsschema (Messbetrieb)
- 24: Teilstück (Sendepfad)
- 26a,b: Teilstück (Empfangspfad)
- 28: Ziel
- 30: Antennenebene
- 32: spektrales Filter
- 34: Modulationsschema (Operationsbetrieb)

- BM: Messbetrieb
- BO: Operationsbetrieb
- SS: Sendesignal
- SM: Messsignal
- SQ: Quersignal
- SÜa,b: Übersprechsignal
- SFa,b: Fehlersignal
- SZa,b: Zielsignal
- fZ: Zielfrequenz
- fZk: Zielfrequenz (korrigiert)
- SAa,b: Ausgangssignal
- t: Zeit
- f: Frequenz
- t0: Zeitpunkt
- t1-4: Gruppenlaufzeit
- SPa,b: Frequenzspektrum
- LFa,b: Fehlerlaufzeit
- FEa,b: Entfernungsfehler
- ffa,b: Fehlerfrequenz
- WS: Schwellwert
- A: Abstand

## Patentansprüche

1. Betriebsverfahren zum Betreiben eines CW-Radarsensors (2), bei dem:
- eine Fehlerlaufzeit (LFa,b) für den Radarsensor (2) ermittelt wird nach einem Kalibrierverfahren zur Ermittlung einer Fehlerlaufzeit (LFa,b) eines CW-Radarsensors (2), wobei der Radarsensor (2) einen von einem Eingang (6) zu einer Sendeantenne (10) führenden Sendepfad (4) und mindestens einen von einer Empfangsantenne (14a,b) zu einem Ausgang (18a,b) führenden Empfangspfad (12a,b) und einen von einem Knoten (8) im Sendepfad (4) zu einem Mischer (16a,b) im Empfangspfad (12a,b) führenden Querpfad (20a,b) aufweist, bei dem:
- der Radarsensor (2) in einem Messbetrieb (BM) betrieben wird, in dem:
- ein nach einem vorgebbaren Modulationsschema (22) erzeugtes CW-Sendesignal als Messsignal (SM) in den Eingang (6) eingespeist wird,
- woraufhin sich das Messsignal (SM) vom Knoten (8) aus einerseits als Quersignal (SQ) über den Querpfad (20a,b), andererseits als Übersprechsignal (SÜa,b) über den Sendepfad (4), die Sende- (10) und Empfangsantenne (14a,b) und den Empfangspfad (12a,b) zum Mischer (16a,b) hin ausbreitet,
- und am Mischer (16a,b) das Quersignal (SQ) und das Übersprechsignal (SÜa,b) zu einem Fehlersignal (SFa,b) gemischt wird,
- ein durch das Messsignal (SM) am Ausgang (18a,b) erzeugtes, das Fehlersignal (SFa,b) enthaltendes Ausgangssignal (SAa,b) digitalisiert und einem spektralen Filter (32) zugeführt wird, das ein dem Ausgangssignal (SAa,b) entsprechendes Frequenzspektrum (SPa,b) liefert,
- eine Fehlerfrequenz (ffa,b) im Frequenzspektrum (SPa,b) identifiziert wird, die dem Fehlersignal (SFa,b) entspricht,
- aus der Fehlerfrequenz (ffa,b) auf Basis des Modulationsschemas (22) die Differenz der Gruppenlaufzeiten (t1-4) des Übersprechsignals (SÜa,b) und des Quersignals (SQ) im Radarsensor (2) vom Knoten (8) zum Mischer (16a,b) als Fehlerlaufzeit (LFa,b) des Radarsensors (2) ermittelt wird,
- der Radarsensor (2) in einem Operationsbetrieb (BO) betrieben wird, wobei im Operationsbetrieb (BO) eine Entfernung (A) zu einem detektierten Ziel (28) unter Berücksichtigung der Fehlerlaufzeit (LFa,b) ermittelt wird,
- im Operationsbetrieb (BO) das Sendesignal nach einem vom ersten Modulationsschema (22) des Messbetriebes (BM) verschiedenen zweiten Modulationsschema (34) erzeugt wird,
**dadurch gekennzeichnet, dass** bei dem Betriebsverfahren
- die Fehlerlaufzeit (LFa,b) in eine dem zweiten Modulationsschema (34) entsprechende Fehlerfrequenz (ffa,b*) abgebildet wird,
- im Operationsbetrieb (BO) ein aus dem Ausgangssignal (SAa,b) erzeugtes Frequenzspektrum (SPA,b) um die Fehlerfrequenz (ffa,b) verschoben und anschließend zur Bestimmung einer Entfernung (A) zum Ziel (28) ausgewertet wird.

2. Betriebsverfahren nach Anspruch 1,
**dadurch gekennzeichnet, dass**
in dem Kalibrierverfahren der Radarsensor (2) mindestens zwei Empfangspfade (12a,b) enthält, wobei je ein Querpfad (20a,b) vom Knoten (8) zum Mischer (16a,b) eines jeden der Empfangspfade (12a,b) führt, und im Verfahren für jeden der Empfangspfade (16a,b) dessen jeweilige Fehlerlaufzeit (LFa,b) ermittelt wird.

3. Betriebsverfahren nach einem der vorhergehenden Ansprüche,
**dadurch gekennzeichnet, dass**
in dem Kalibrierverfahren das Verfahren bei einem Radarsensor (2) durchgeführt wird, der eine monostatische oder quasi-monostatische Antennenanordnung aus Sende- (10) und Empfangsantennen (14a,b) aufweist.

4. Betriebsverfahren nach einem der vorhergehenden Ansprüche,
**dadurch gekennzeichnet, dass**
in dem Kalibrierverfahren das Frequenzspektrum (SPa,b) im spektralen Filter (32) mit Hilfe einer Fourier-Transformation erzeugt wird.

5. Betriebsverfahren nach einem der vorhergehenden Ansprüche,
**dadurch gekennzeichnet, dass**
in dem Kalibrierverfahren ein Schwellwert (WS) für das Frequenzspektrum (SPa,b) vorgegeben wird und eine Frequenz eines Spektralanteils, der über dem Schwellwert (WS) liegt, als Fehlerfrequenz (ffa,b) identifiziert wird.

6. Betriebsverfahren nach einem der vorhergehenden Ansprüche,
**dadurch gekennzeichnet, dass**
der Messbetrieb (BM) in einer Aktivierungsphase des Radarsensors (2) für den Operationsbetrieb (BO) ausgeführt wird.

7. Betriebsverfahren nach einem der vorhergehenden Ansprüche,
**dadurch gekennzeichnet, dass**
ein Sendesignal (SS) für einen Operationsbetrieb (BO) des Radarsensors (2) als Messsignal (SM) genutzt wird und die Schritte des Messbetriebs (BM) im Operationsbetrieb (BO) durchgeführt werden und neben einer operationellen Auswertung des Ausgangssignals (SAa,b) auch - wenn möglich - die aktuelle Fehlerlaufzeit (LFa,b) aus dem Ausgangssignal (SA,b) ermittelt wird.

## Claims

1. Operating method for operating a CW radar sensor (2), in which:
- an error delay time (LFa,b) for the radar sensor (2) is determined according to a calibration method for determining an error delay time (LFa,b) of a CW radar sensor (2), wherein the radar sensor (2) has a transmission path (4) leading from an input (6) to a transmission antenna (10) and at least one reception path (12a,b) leading from a reception antenna (14a,b) to an output (18a,b) and a transverse path (20a,b) leading from a node (8) in the transmission path (4) to a mixer (16a,b) in the reception path (12a,b), in which:
- the radar sensor (2) is operated in a measuring mode (BM), in which:
- a CW transmission signal generated according to a predefinable modulation scheme (22) is fed into the input (6) as a measurement signal (SM),
- whereupon the measurement signal (SM) propagates from the node (8) on the one hand as a transverse signal (SQ) via the transverse path (20a,b) and on the other hand as a crosstalk signal (SÜa,b) via the transmission path (4), the transmission (10) and reception antenna (14a,b) and the reception path (12a,b) towards the mixer (16a,b),
- and the transverse signal (SQ) and the crosstalk signal (Süa,b) are mixed at the mixer (16a,b) to form an error signal (SFa,b),
- an output signal (SAa,b) generated by the measurement signal (SM) at the output (18a,b) and containing the error signal (SFa,b) is digitized and supplied to a spectral filter (32) which delivers a frequency spectrum (SPa,b) corresponding to the output signal (SAa,b),
- an error frequency (ffa,b) in the frequency spectrum (Spa,b) is identified, said error frequency corresponding to the error signal (SFa,b),
- the difference between the group delay times (t1-4) of the crosstalk signal (SÜa,b) and the transverse signal (SQ) in the radar sensor (2) from the node (8) to the mixer (16a,b) is determined as the error delay time (LFa,b) of the radar sensor (2) from the error frequency (ffa,b) on the basis of the modulation scheme (22),
- the radar sensor (2) is operated in an operating mode (BO), wherein, in operating mode (BO), a distance (A) from a detected target (28) is determined taking into account the error delay time (LFa,b),
- in operating mode (BO), the transmission signal is generated in accordance with a second modulation scheme (34) different from the first modulation scheme (22) of the measuring mode (BM),
**characterized in that**, in the operating method,
- the error delay time (LFa,b) is mapped into an error frequency (ffa,b*) corresponding to the second modulation scheme (34),
- in operating mode (BO), a frequency spectrum (SPA,b) generated from the output signal (SAa,b) is shifted by the error frequency (ffa,b) and then evaluated to determine a distance (A) from the target (28).

2. Operating method according to Claim 1, **characterized in that**
in the calibration method, the radar sensor (2) contains at least two reception paths (12a,b), wherein in each case one transverse path (20a,b) leads from the node (8) to the mixer (16a,b) of each of the reception paths (12a,b) and, in the method, the respective error delay time (LFa,b) thereof is determined for each of the reception paths (16a,b).

3. Operating method according to any of the preceding claims,
**characterized in that**
in the calibration method, the method is carried out in the case of a radar sensor (2) having a monostatic or quasi-monostatic antenna arrangement composed of transmission antennas (10) and reception antennas (14a,b).

4. Operating method according to any of the preceding claims,
**characterized in that**
in the calibration method, the frequency spectrum (SPa,b) is generated in the spectral filter (32) using a Fourier transformation.

5. Operating method according to any of the preceding claims,
**characterized in that**
in the calibration method, a threshold value (WS) is predefined for the frequency spectrum (SPa,b) and a frequency of a spectral component above the threshold value (WS) is identified as an error frequency (ffa,b).

6. Operating method according to any of the preceding claims,
**characterized in that**
the measuring mode (BM) is carried out in an activation phase of the radar sensor (2) for the operating mode (BO).

7. Operating method according to any of the preceding claims,
**characterized in that**
a transmission signal (SS) for an operating mode (BO) of the radar sensor (2) is used as a measurement signal (SM) and the steps of the measuring mode (BM) are carried out in operating mode (BO) and, in addition to an operational evaluation of the output signal (SAa,b), the current error delay time (LFa,b) is also determined - if possible - from the output signal (SA,b).

## Revendications

1. Procédé d'exploitation pour le fonctionnement d'un capteur radar CW (2), dans lequel :
- un temps d'exécution d'erreur (LFa,b) pour le capteur radar (2) est déterminé par un procédé d'étalonnage permettant de déterminer un temps d'exécution d'erreur (LFa,b) d'un capteur radar CW (2), le capteur radar (2) présentant un trajet d'émission (4) allant d'une entrée (6) à une antenne d'émission (10) et au moins un trajet de réception (12a,b) allant d'une antenne de réception (14a,b) à une sortie (18a,b) et un trajet transversal (20a,b) allant d'un nœud (8) dans le trajet d'émission (4) à un mélangeur (16a,b) dans le trajet de réception (12a,b), dans lequel :
- le capteur radar (2) est utilisé dans un mode de mesure (BM) dans lequel :
- un signal d'émission CW généré selon un schéma de modulation prédéfini (22) est injecté dans l'entrée (6) en tant que signal de mesure (SM),
- le signal de mesure (SM) provenant du nœud (8) se propage ensuite vers le mélangeur (16a, b) d'une part en tant que signal transversal (SQ) via le trajet transversal (20a,b), et d'autre part en tant que signal de correspondance (SÜa,b) via le trajet d'émission (4), les antennes d'émission (10) et de réception (14a,b) et le trajet de réception (12a,b),
- et le signal transversal (SQ) et le signal de correspondance (SÜa,b) sont mélangés au niveau du mélangeur (16a,b) en un signal d'erreur (SFa,b),
- un signal de sortie (SAa,b) généré par le signal de mesure (SM) au niveau de la sortie (18a,b) et contenant le signal d'erreur (SFa,b) est numérisé et fourni à un filtre spectral (32) qui délivre un spectre de fréquences correspondant au signal de sortie (SAa,b),
- une fréquence d'erreur (ffa,b) est identifiée dans le spectre de fréquences (Spa,b) correspondant au signal d'erreur (SFa,b),
- la différence entre les temps d'exécution de groupe (t1-4) du signal de correspondance (SÜa,b) et du signal transversal (SQ) dans le capteur radar (2) du nœud (8) au mélangeur (16a,b) est déterminée en tant que temps d'exécution d'erreur (LFa,b) du capteur radar (2) à partir de la fréquence d'erreur (ffa,b) sur la base du schéma de modulation (22),
- le capteur radar (2) est utilisé dans un mode opérationnel (BO), étant entendu que dans le mode opérationnel (BO), une distance (A) par rapport à une cible détectée (28) est déterminée en tenant compte du temps d'exécution d'erreur (LFa,b),
- dans le mode opérationnel (BO), le signal d'émission est généré selon un deuxième schéma de modulation (34) différent du premier schéma de modulation (22) du mode de mesure (BM),
**caractérisé en ce que**, dans le procédé d'exploitation
- le temps d'exécution d'erreur (LFa,b) est représenté dans une fréquence d'erreur correspondant au second schéma de modulation (34) (ffa,b*),
- dans le mode opérationnel (BO), un spectre de fréquences (SPA,b) généré par le signal de sortie (SAa,b) est décalé de la fréquence d'erreur (ffa,b), puis évalué pour déterminer une distance (A) par rapport à la cible (28).

2. Procédé d'exploitation selon la revendication 1, **caractérisé en ce que**
dans le procédé d'étalonnage, le capteur radar (2) comporte au moins deux voies de réception (12a,b), un trajet transversal (20a,b) allant du nœud (8) au mélangeur (16a,b) de chacun des trajets de réception (12a,b) et son temps d'exécution d'erreur (LFa,b) étant déterminés par le procédé pour chacun des trajets de réception (16a,b).

3. Procédé d'exploitation selon l'une des revendications précédentes,
**caractérisé en ce que**,
dans le procédé d'étalonnage, le procédé est mis en œuvre sur un capteur radar (2) qui présente un système d'antenne monostatique ou quasi-monostatique constitué d'antennes d'émission (10) et de réception (14a,b).

4. Procédé d'exploitation selon l'une des revendications précédentes,
**caractérisé en ce que**,
dans le procédé d'étalonnage, le spectre de fréquences (SPa,b) est généré dans le filtre spectral (32) à l'aide d'une transformation de Fourier.

5. Procédé d'exploitation selon l'une des revendications précédentes,
**caractérisé en ce que**,
dans le procédé d'étalonnage, une valeur de seuil (WS) est spécifiée pour le spectre de fréquences (Spa,b) et identifie en tant que fréquence d'erreur (ffa,b) une fréquence d'une fraction de spectre qui se situe au-dessus de la valeur de seuil (WS).

6. Procédé d'exploitation selon l'une des revendications précédentes,
**caractérisé en ce que**
le mode de mesure (BM) est mis en œuvre pour le mode opérationnel (BO) lors d'une phase d'activation du capteur radar (2).

7. Procédé d'exploitation selon l'une des revendications précédentes,
**caractérisé**
**en ce qu'**un signal d'émission (SS) destiné à un fonctionnement opérationnel (BO) du capteur radar (2) est utilisé en tant que signal de mesure (SM) et **en ce que** les étapes du mode de mesure (BM) sont effectuées dans le mode opérationnel (BO) et, en plus d'une évaluation opérationnelle du signal de sortie (SAa,b), le temps d'exécution d'erreur (LFa,b) actuel est déterminé - lorsque cela est possible - à partir du signal de sortie (SA,b) .
